# FASCICULE DE BREVET EUROPEEN

(11) **EP 3 705 331 B1**
(45) Date de publication et mention de la délivrance du brevet: **01.12.2021**
(21) Numéro de dépôt: 20167337.3
(22) Date de dépôt: 07.10.2019
(51) Int. Cl.: B60J 7/185, B60J 7/19, E05B 47/00, E05B 51/00, F16B 1/00, F16B 21/16

(54) **DISPOSITIF DE VERROUILLAGE, EN PARTICULIER DISPOSITIF DE RANGEMENT DE MASQUE RESPIRATOIRE DESTINÉ À LA FOURNITURE D'OXYGÈNE DANS UN AÉRONEF ET SYSTÈME D'ALIMENTATION EN OXYGÈNE**
VERRIEGELUNGSVORRICHTUNG, INSBESONDERE AUFBEWAHRUNGSVORRICHTUNG FÜR ATEMMASKE ZUR SAUERSTOFFVERSORGUNG IN EINEM LUFTFAHRZEUG, UND SAUERSTOFFZUFÜHRSYSTEM
LOCKING DEVICE, IN PARTICULAR DEVICE FOR STORING A BREATHING MASK INTENDED FOR SUPPLYING OXYGEN IN AN AIRCRAFT AND OXYGEN SUPPLY SYSTEM

(30) Priorité: 12.10.2018 FR 1859490
(43) Date de publication de la demande: 09.09.2020
(62) Demande divisionnaire de: 19201772.1
(73) Titulaire: SAFRAN AEROTECHNICS, 78370 Plaisir (FR)
(72) Inventeur: KLOCKIEWICZ, Florian, 77570 MOISSY- CRAMAYEL (FR); FROMAGE, Matthieu, 77550 MOISSY- CRAMAYEL (FR); NALY, CHARLES, 25410 POUILLEY-FRANCAIS (FR); BRUIANT CHRYSOSTOM, Benoit, 78570 ANDRESY (FR)
(74) Mandataire: Plasseraud IP

(56) Documents cités:
- EP-A1- 2 818 206
- WO-A1-2016/156283
- JP-A- 2004 092 891
- JP-U- H0 587 186
- US-A- 3 942 828
- US-A- 5 129 753
- US-A1- 2004 069 028
- US-A1- 2008 217 927

## Description

### Domaine de l'invention

L'invention concerne un dispositif de verrouillage, notamment destiné à être utilisé dans un dispositif de rangement de masque respiratoire, ainsi qu'un système d'alimentation en oxygène comprenant le dispositif de rangement, le masque respiratoire étant destiné à fournir de l'oxygène à un occupant d'un aéronef.

### Contexte de l'invention

Il est déjà connu du document US2014/0000591A1 un dispositif d'oxygène d'urgence pour au moins un passager d'un aéronef, comprenant :
- un générateur d'oxygène chimique et/ou un cylindre d'oxygène sous pression comprenant une source d'oxygène et une unité de démarrage adaptée pour initier une réaction dans ladite source d'oxygène,
- au moins un masque à oxygène relié à la source d'oxygène de sorte qu'un flux d'oxygène provenant de ladite source d'oxygène après que ladite unité de démarrage a déclenché la réaction alimente le masque à oxygène, et
- un ensemble d'activation pour activer l'unité de démarrage et comprenant un actionneur ayant un matériau à mémoire de forme.

Un matériau à mémoire de forme a la capacité de garder en mémoire une forme initiale et de la reprendre après avoir été déformé. Ainsi, le matériau à mémoire de forme est capable d'alterner entre deux formes selon sa température. Sa température est avantageusement augmentée par apport d'alimentation électrique.

Un élément à mémoire de forme est globalement satisfaisant en termes de fiabilité et très avantageux concernant le poids.

Même si le dispositif mentionné ci-dessus apporte satisfaction, l'invention vise à proposer des améliorations relatives notamment au poids, à l'encombrement et/ou à la fiabilité.

Il est connu du document US2008/217927 A1 un dispositif de verrouillage comprend :
- un support,
- un premier élément de verrouillage et un deuxième élément de verrouillage, le deuxième élément de verrouillage étant monté mobile sur le support entre une position verrouillée et une position déverrouillée, dans la position verrouillée le premier élément de verrouillage coopère avec le deuxième élément de verrouillage,
- un élément à mémoire de forme présentant une première longueur lorsqu'il n'est pas activé et une deuxième longueur lorsqu'il est activé,
- un élément intermédiaire mobile entre une position de retenue et une position de libération, dans la position de retenue l'élément intermédiaire retient le premier élément de verrouillage dans la position verrouillée et dans la position de libération l'élément intermédiaire autorise le déplacement du premier élément de verrouillage vers la position déverrouillée, et l'élément à mémoire de forme est relié à l'élément intermédiaire pour déplacer l'élément intermédiaire vers la position de libération lorsque l'élément à mémoire de forme est activé, et
- un dispositif de rappel exerçant un premier effort de rappel sur l'élément à mémoire de forme lorsque l'élément à mémoire de forme présente la première longueur et un deuxième effort sur l'élément à mémoire de forme lorsque l'élément à mémoire de forme présente la deuxième longueur.

Un élément à mémoire de forme est un élément comprenant un matériau à mémoire de forme. Ainsi, l'élément à mémoire de forme agit sur l'élément intermédiaire pour amener le premier élément de verrouillage en position déverrouillée, ce qui réduit l'énergie nécessaire au dispositif pour déplacer le premier élément de verrouillage de la position verrouillée à la position déverrouillée pour un même niveau de fiabilité.

Les documents WO2016/156283 A1, JP H05 87186 U, JP 2004 092 891 A, US 2004/069028 A1 et US 5 129 753 A divulguent des dispositifs comprenant un élément à mémoire de forme.

### Exposé de l'invention

Conformément à l'invention, le premier effort de rappel est supérieur au deuxième effort de rappel.

Ainsi, le dispositif de rappel sollicite l'élément à mémoire de forme pour qu'il reprenne sa première longueur après avoir été activé, mais n'exerce qu'un faible effort lorsque l'élément à mémoire de forme présente sa deuxième longueur.

Selon une autre caractéristique conforme à l'invention, le premier élément de verrouillage est de préférence sollicité vers la position de libération.

Ainsi, l'énergie à fournir par l'élément à mémoire de forme (et donc sa consommation d'énergie électrique) pour engendrer le déplacement du premier élément de verrouillage de la position verrouillée à la position déverrouillée est réduite. Or, la consommation d'énergie électrique dans un dispositif destiné à être embarqué dans un aéronef a un impact sur le poids dans la mesure où cette énergie doit soit être stockée au préalable dans l'aéronef, soit être produite à partir d'une autre source d'énergie (en particulier le carburant) embarquée par l'aéronef.

Selon une caractéristique complémentaire conforme à l'invention, le premier élément de verrouillage est sollicité vers la position de libération indépendamment de la pesanteur.

Ainsi, lorsque l'aéronef est soumis à des turbulences le déplacement du premier élément de verrouillage vers la position de libération est moins affecté.

Selon une caractéristique encore complémentaire conforme à l'invention, le dispositif de verrouillage comprend de préférence un élément élastique d'armement sollicitant le premier élément de verrouillage vers la position déverrouillée.

Ainsi, l'élément élastique emmagasine une partie de l'énergie nécessaire pour déplacer le premier élément de verrouillage de la position verrouillée à la position déverrouillée.

Selon une caractéristique alternative conforme à l'invention, le dispositif de verrouillage comprend en outre de préférence un aimant permanent sollicitant magnétiquement le premier élément de verrouillage vers la position déverrouillée.

Ainsi, l'aimant permanent emmagasine une partie de l'énergie nécessaire pour déplacer le premier élément de verrouillage de la position verrouillée à la position déverrouillée.

De préférence, l'aimant permanent coopère avec un élément magnétique ou magnétisable, l'un parmi l'aimant permanent et l'élément magnétique ou magnétisable étant fixé au support et l'autre étant fixé au premier élément de verrouillage.

Selon une autre caractéristique conforme à l'invention, l'élément à mémoire de forme est de préférence un fil à mémoire de forme.

Le coût et le poids du dispositif de verrouillage sont ainsi réduits.

De préférence, le diamètre du fil à mémoire de forme est inférieur à 0,5 millimètre

Conformément à l'invention, de manière complémentaire, le dispositif de verrouillage présente de préférence les caractéristiques suivantes :
- le fil à mémoire de forme présente une première extrémité, une deuxième extrémité et une portion intermédiaire, le fil à mémoire de forme agit sur l'élément intermédiaire par l'intermédiaire de la portion intermédiaire,
- le fil à mémoire de forme présente une première portion rectiligne entre la première extrémité et la portion intermédiaire,
- le fil à mémoire de forme présente une deuxième portion rectiligne entre la deuxième extrémité et la portion intermédiaire,
- la première portion rectiligne forme un angle par rapport à la deuxième portion rectiligne compris entre 5 degrés et 90 degrés, de préférence compris entre 10 degrés et 45 degrés.

Ainsi, le rapport entre la force appliquée par le fil à mémoire de forme lorsqu'il est activé et sa variation de longueur entre son état non-activé et son état activé, ainsi que l'encombrement du fil à mémoire de forme (et donc du dispositif de verrouillage) est optimisé.

Selon une autre caractéristique conforme à l'invention, de préférence le dispositif de rappel sollicite l'élément intermédiaire vers la position de retenue, et plus préférentiellement le dispositif de rappel exerce le premier effort de rappel et le deuxième effort de rappel sur l'élément à mémoire de forme par l'intermédiaire de l'élément intermédiaire.

Selon une caractéristique complémentaire conforme à l'invention, de préférence l'élément intermédiaire vient en butée contre le support dans la position de retenue.

Selon une autre caractéristique conforme à l'invention, de préférence l'élément intermédiaire est monté rotatif autour d'un axe de rotation intermédiaire entre la position de retenue et la position de libération sur le support.

Selon une caractéristique complémentaire conforme à l'invention, de préférence l'axe de rotation intermédiaire est fixe par rapport au support et l'élément intermédiaire présente un centre d'inertie situé à proximité immédiate de l'axe de rotation intermédiaire. On comprendra en particulier par proximité immédiate, situé à moins de 1 centimètre, de préférence à moins de 5 millimètres.

Ainsi, le couple de frottement est réduit. En outre, les mouvements (éventuellement brusques) de l'aéronef engendrent des mouvements minimes ou nuls de l'élément intermédiaire, de sorte que le risque que l'élément intermédiaire se déplace inopinément vers la position de libération est réduite.

Selon une autre caractéristique conforme à l'invention, de préférence le premier élément de verrouillage est monté rotatif autour d'un axe de rotation de verrou entre la position verrouillée et la position déverrouillée sur le support.

Selon une caractéristique complémentaire conforme à l'invention, de préférence l'axe de rotation de verrou est fixe par rapport au support et le premier élément de verrouillage présente un centre d'inertie situé à proximité immédiate de l'axe de rotation de verrou. On comprendra en particulier par proximité immédiate, situé à moins de 1 centimètre, de préférence à moins de 5 millimètres.

Ainsi, le couple de frottement est réduit. En outre, les mouvements (éventuellement brusques) de l'aéronef engendrent des mouvements minimes ou nuls du premier élément de verrouillage, de sorte que le risque que le premier élément de verrouillage se déplace inopinément vers la position déverrouillée est réduite.

Selon une autre caractéristique conforme à l'invention, de préférence le premier élément de verrouillage forme un crochet.

Selon encore une autre caractéristique conforme à l'invention, de préférence le dispositif de verrouillage comprend en outre un galet pivotant, l'élément intermédiaire retenant le premier élément de verrouillage dans la position verrouillée par l'intermédiaire du galet pivotant.

Ainsi, l'énergie dissipée par frottement entre l'élément intermédiaire et le premier élément de verrouillage lorsque l'élément intermédiaire passe de la position de retenue à la position de libération est réduite.

L'invention concerne en outre un dispositif de rangement de masque respiratoire comprenant le dispositif de verrouillage précité. Un tel dispositif est en particulier destiné à fournir de l'oxygène à des passagers d'un aéronef dans une situation d'urgence telle qu'une situation de décompression ou de fumée ou similaire à bord d'un aéronef. Chaque dispositif de rangement comprend généralement plusieurs masques respiratoires destinés à fournir de l'oxygène à des passagers d'une même rangée de sièges. Habituellement, les masques à oxygène sont stockés au-dessus des passagers dans un logement disposé au-dessus du siège des passagers, et en cas d'urgence sont libérés pour tomber hors du logement. Les masques à oxygène sont alimentés en oxygène notamment par un réservoir stockant l'oxygène, un générateur chimique d'oxygène (COG) et/ou un système de génération d'oxygène embarqué (OBOGS). Conformément à l'invention, le dispositif de rangement comprend en outre :
- un réceptacle comportant un logement et une trappe, la trappe étant mobile par rapport au logement entre une position fermée et une position ouverte,
- l'un parmi le support et le deuxième élément de verrouillage est porté par le logement et l'autre est porté par la trappe, et
- au moins un masque respiratoire disposé dans le réceptacle lorsque la trappe est en position fermée.

Selon une autre caractéristique conforme à l'invention, le déplacement de la trappe par rapport au logement de la position fermée vers la position ouverte entraine de préférence le déplacement du premier élément de verrouillage vers la position déverrouillée

Ainsi, la source d'énergie pour déplacer le premier élément de verrouillage de la position verrouillée à la position déverrouillée peut être la même que la source d'énergie pour déplacer la trappe de la position fermée à la position ouverte. Cette source d'énergie peut être la pesanteur.

L'invention concerne en outre un système d'alimentation en oxygène d'aéronef comprenant le dispositif de rangement et une source d'oxygène reliée au masque respiratoire.

### Brève description des figures

D'autres caractéristiques et avantages de la présente invention apparaîtront dans la description détaillée suivante, se référant aux dessins annexés dans lesquels :
- FIG. 1 illustre schématiquement un système d'alimentation en oxygène dans un aéronef comprenant deux dispositifs de rangement conforme à l'invention,
- FIG. 2 illustre à échelle agrandie la zone repérée II à la figure 1 et représente schématiquement un premier mode de réalisation de dispositif de rangement conforme à l'invention dans un premier état,
- FIG. 3 illustre schématiquement le dispositif de rangement selon le premier mode de réalisation dans un deuxième état,
- FIG. 4 illustre schématiquement le dispositif de rangement selon le premier mode de réalisation dans un troisième état,
- FIG. 5 illustre schématiquement un deuxième mode de réalisation de dispositif de rangement conforme à l'invention dans le premier état,
- FIG. 6 illustre schématiquement un troisième mode de réalisation de dispositif de rangement conforme à l'invention dans le premier état.

### Description détaillée de l'invention

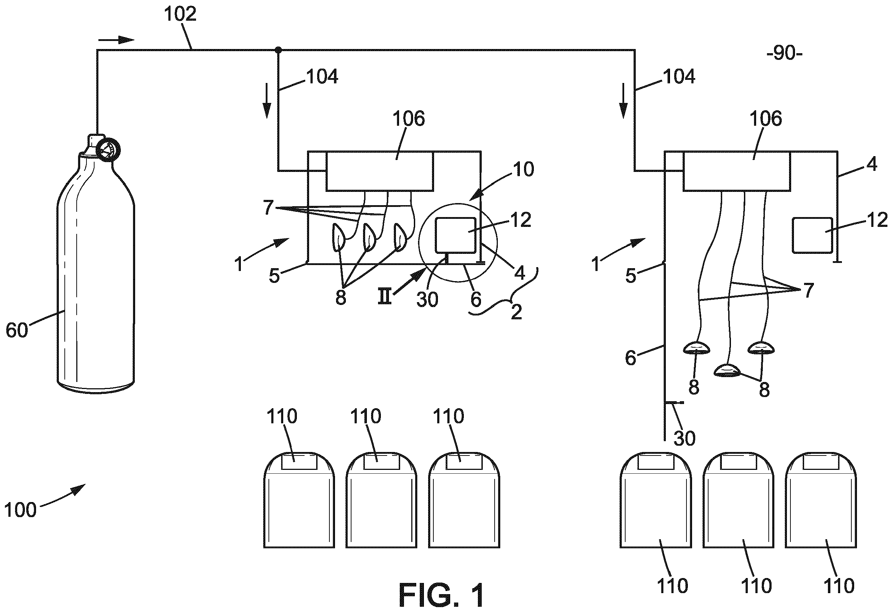

La figure 1 illustre un aéronef 90 équipé d'un système d'alimentation en oxygène 100 et de sièges passagers 110. Le système d'alimentation en oxygène 100 comprend essentiellement une source d'oxygène 60, une conduite d'alimentation principale 102, des conduites d'alimentations secondaires 104 et des dispositifs de rangement 1 (deux sont illustrés). Les dispositifs de rangement 1 sont disposés au-dessus des sièges passagers 110.

Dans le mode de réalisation illustré à la figure 1, les sièges passagers 110 sont regroupés en rangées de sièges passagers 110 adjacents et un dispositif de rangement 1 est prévu par rangée de sièges passagers 110 adjacents. Chaque dispositif de rangement 1 comprend plusieurs masques respiratoires 8 (trois masques respiratoires sont illustrés) et un boitier de répartition 106 relie les masques respiratoires 8 à une conduite d'alimentation secondaire 104 via des conduits souples 7 interposés entre le boitier de répartition 106 et les masques respiratoires 8.

La source d'oxygène 60 illustrée est constituée par un réservoir d'oxygène sous pression. En variante, le réservoir d'oxygène sous pression pourrait être remplacé ou complété par toute autre source d'oxygène, telle que générateur chimique d'oxygène (COG), système de génération d'oxygène embarqué (OBOGS) ou analogue.

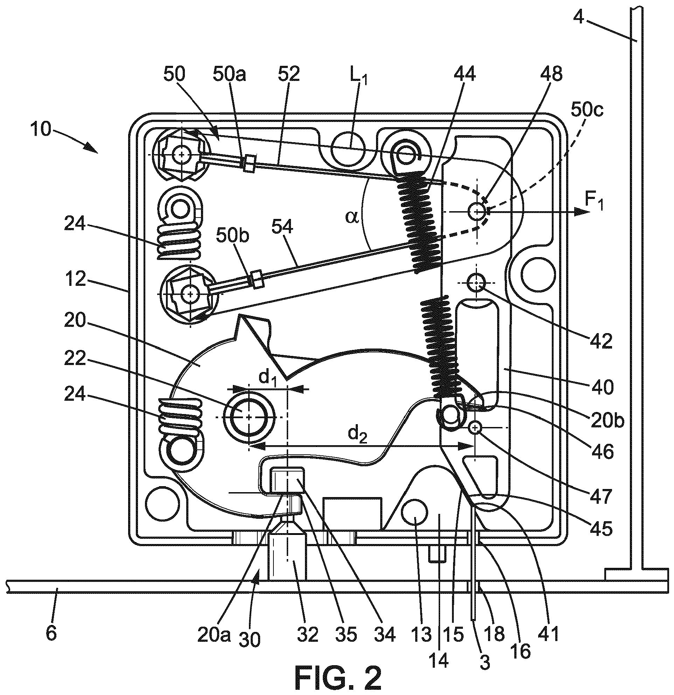

Tel qu'illustré notamment aux figures 2 à 4, selon le premier mode de réalisation illustré, le dispositif de rangement 1 comprend essentiellement, outre les masques respiratoires 8, un réceptacle 2 et un dispositif de verrouillage 10. Le réceptacle 2 renferme le boitier de répartition 106. En variante, la source d'oxygène 60 ou au moins une des sources d'oxygène pourrait être placée dans le réceptacle 2.

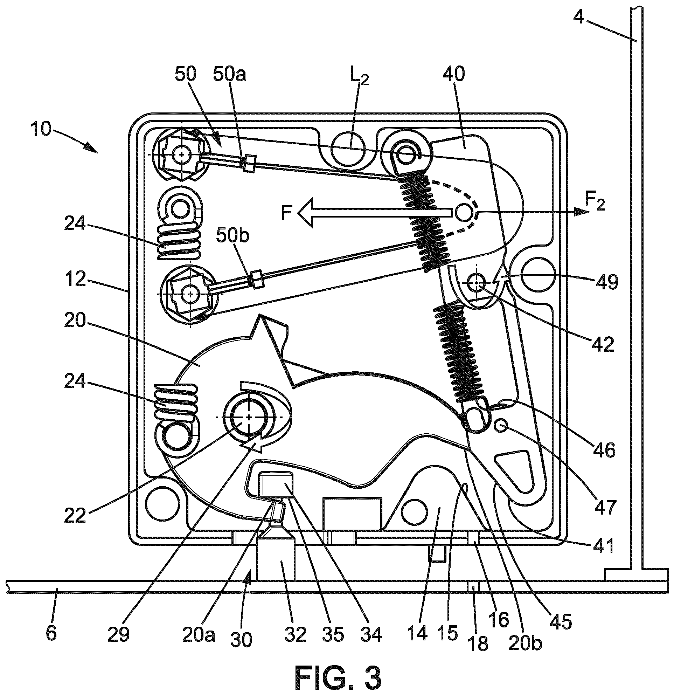

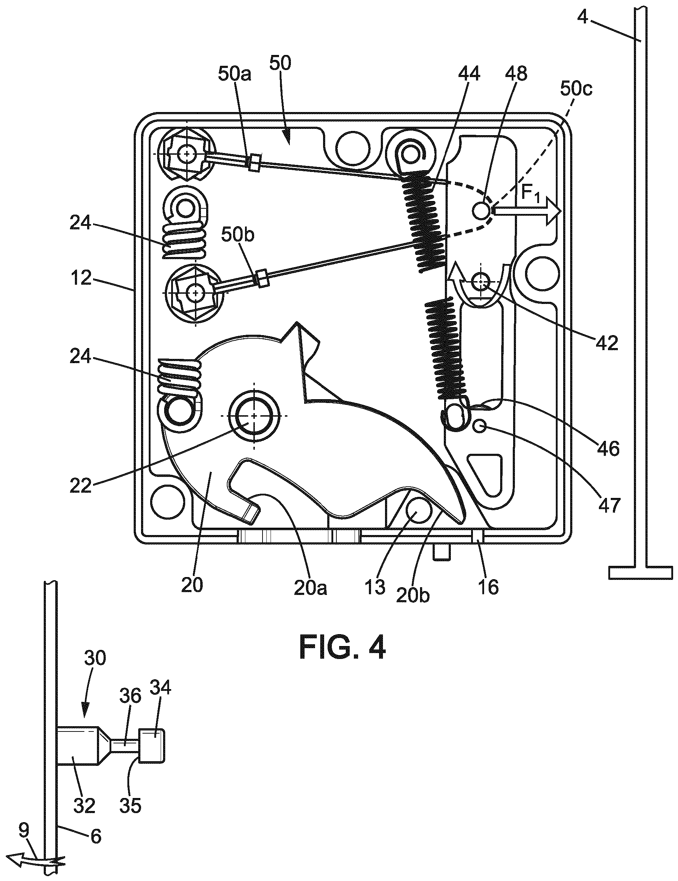

Le réceptacle 2 comporte un logement 4 et une trappe 6. Dans le mode de réalisation illustré, la trappe 6 est montée mobile en rotation par rapport au logement 4 autour d'un axe d'articulation 5 (perpendiculaire au plan de la figure 1 entre une position fermée et une position ouverte. La trappe 6 est sollicitée par gravité vers la position ouverte. En complément, un ressort, de préférence un ressort de torsion peut être prévu afin de favoriser l'ouverture de la trappe 6. La trappe 6 est illustrée en position fermée aux figures 2 et 3, ainsi que sur l'un (celui de gauche) des deux dispositifs de rangement 1 illustrés à la figure 1. La trappe 6 est illustrée en position ouverte à la figure 4, ainsi que sur l'un (celui de droite) des deux dispositifs de rangement 1 illustrés à la figure 1. En variante, la trappe 6 pourrait notamment translater par rapport au logement 4, pivoter puis être libérée du logement 4, ou analogue pour se déplacer de la position fermée à la position ouverte.

Le dispositif de verrouillage 10 comprend notamment un boitier 12 formant support, un premier élément de verrouillage 20, un deuxième élément de verrouillage 20, un élément intermédiaire 40 et un fil à mémoire de forme 50.

Dans le mode de réalisation illustré, le boitier 12 est fixé au logement 4. En variante, le boitier 12 pourrait être fixé à la trappe 6. Le boitier 12 pourrait également être omis, les autres éléments constituant le dispositif de verrouillage 10 seraient alors portés par le logement 4 ou la trappe 6 sans l'intermédiaire du boitier 12, le logement 4 ou la trappe 6 feraient alors office de support pour le premier élément de verrouillage 20, le deuxième élément de verrouillage 20, l'élément intermédiaire 40 et le fil à mémoire de forme 50.

Dans le mode de réalisation illustré, le premier élément de verrouillage 20 est porté par le boitier 12. Plus précisément, le premier élément de verrouillage 20 est monté mobile par rapport au boitier 12 autour d'un axe de rotation de verrou 22 entre une position verrouillée et une position déverrouillée. Par ailleurs, dans le mode de réalisation illustré, l'axe de rotation de verrou 22 s'étend parallèlement à l'axe d'articulation 5. Le premier élément de verrouillage 20 est illustré en position verrouillée à la figure 2 et en position déverrouillée à la figure 4. Le premier élément de verrouillage 20 comprend une première zone de coopération 20a et une deuxième zone de coopération 20b. En variante, l'axe de rotation de verrou 22 pourrait s'étendre suivant une direction différente.

Le premier élément de verrouillage 20 est sollicité par un ressort d'armement 24, du type ressort de traction dans le premier mode de réalisation illustré. Le ressort d'armement 24 emmagasine de l'énergie pour rapidement déplacer le premier élément de verrouillage de la position verrouillée à la position déverrouillée. En variante, le ressort d'armement 24 pourrait notamment être du type ressort de compression ou de torsion.

Le centre d'inertie du premier élément de verrouillage 20 est situé au niveau de l'axe de rotation de verrou 22.

Dans le premier mode de réalisation illustré, le premier élément de verrouillage 20 comprend un crochet. En outre, la première zone de coopération 20a se présente avantageusement sous forme d'une fourche en U comprenant deux doigts. En position déverrouillée, la deuxième zone de coopération 20b vient en appui contre un plot 13 disposé sur le boitier

Dans le premier mode de réalisation illustré, le deuxième élément de verrouillage 30 est porté par la trappe 6 et plus précisément fixé à la trappe 6. Le deuxième élément de verrouillage 30 comprend à une extrémité une tige 32 fixée à la trappe 6 et à une extrémité opposée une tête 34 présentant un épaulement 35 reliée à la tige 32 par un col 36 de section transversale réduite par rapport à la section transversale de la tête 34. Le deuxième élément de verrouillage 30 remplit la fonction de pêne.

Tel qu'illustré à la figure 2, lorsque la trappe 6 est en position fermée et le premier élément de verrouillage 20 est en position verrouillée, les deux doigts de la première zone de coopération 20a s'étendent de part et d'autre du col 36 et forment une butée vis-à-vis de l'épaulement 35, afin de maintenir la trappe 6 en position fermée. En outre, lorsque la trappe 6 tend à se déplacer de la position fermée vers la position ouverte, notamment sous l'action de la pesanteur, le deuxième élément de verrouillage 30 tend à faire pivoter le premier élément de verrouillage 20 vers la position verrouillée amenant la deuxième zone de coopération 20b en butée contre l'élément intermédiaire 40. Le risque de bruit dû à des mouvements du premier élément de verrouillage 20 par rapport au boitier 12 et à l'élément intermédiaire 40 est ainsi réduit.

Tel qu'illustré à la figure 4, lorsque le premier élément de verrouillage 20 se déplace de la position verrouillée à la position déverrouillée, la première zone de coopération 20a s'écarte essentiellement latéralement du deuxième élément de verrouillage 30. Ainsi, lorsque le premier élément de verrouillage 20 est en position déverrouillée, la zone de coopération 20a est désengagée du deuxième élément de verrouillage 30, la trappe 6 est alors libre de se déplacer vers la position ouverte.

L'élément intermédiaire 40 est porté par le boitier 12. Plus précisément, l'élément intermédiaire 40 est monté mobile en rotation autour d'un axe de rotation intermédiaire 42 entre une position de retenue et une position de libération par rapport au boitier 12. L'axe de rotation intermédiaire 42 s'étend parallèlement à l'axe de rotation de verrou 22. L'élément intermédiaire 40 est représenté, en position de retenue à la figure 2 et en position de libération aux figures 3 et 4.

L'élément intermédiaire 40 présente un élément de butée 46. Lorsque l'élément intermédiaire 40 est en position de retenue, l'élément de butée 46 s'oppose au déplacement de la deuxième zone de coopération 20b du premier élément de verrouillage 20 pour maintenir le premier élément de verrouillage 20 en position verrouillée.

Dans le mode de réalisation illustré, l'élément de butée 46 est formé par un galet monté rotatif autour d'un axe 47 parallèle à l'axe de rotation intermédiaire 42 sur l'élément intermédiaire 40. Le galet 46 est interposé entre la deuxième zone de coopération 20b du premier élément de verrouillage 20 et l'élément intermédiaire, afin de réduire les frottements entre le premier élément de verrouillage 20 et l'élément intermédiaire 40.

Lorsque l'élément intermédiaire 40 se déplace de la position de retenue à la position de libération, le galet 46 se déplace latéralement tout en tournant autour de l'axe 47 jusqu'à se retrouver à l'écart de la deuxième zone de coopération 20b, laissant alors le premier élément de verrouillage 20 se déplacer de la position verrouillée à la position déverrouillée.

L'élément intermédiaire 40 est sollicité vers la position de retenue par un ressort de rappel 44 du type ressort de traction. Le ressort de rappel 44 présente une raideur plusieurs fois inférieure, de préférence au moins cinq fois inférieure, à la raideur du ressort d'armement 24.

L'élément intermédiaire 40 présente une surface de butée 45 et le boitier 12 est muni d'un élément d'arrêt 14 présentant une surface d'arrêt 15. Lorsque l'élément intermédiaire 40 est en position de retenue, la surface de butée 45 de l'élément intermédiaire 40 vient en butée contre la surface d'arrêt 15, de sorte que l'amplitude de la rotation de l'élément intermédiaire sous l'action du ressort de rappel 44 est limitée.

Le centre d'inertie de l'élément intermédiaire 40 est situé au niveau de l'axe de rotation intermédiaire 42.

L'élément intermédiaire 40 présente des évidements afin de réduire sa masse.

En outre, l'élément intermédiaire 40 présente une surface biseautée 41. La surface biseautée 41 est disposée en regard (dans l'alignement) d'un passage 16 dans le boitier 12 et d'un orifice 18 dans la trappe 6. Ainsi, en introduisant une tige 3 à travers l'orifice 18 et le passage 16, la surface biseautée est contactée par la tige 3 (tel qu'illustré à la figure 2), de sorte qu'en poursuivant l'introduction de la tige 3 à travers l'orifice 18 et le passage 16, l'élément intermédiaire est déplacé vers la position de libération. Ainsi, la trappe 6 peut être ouverte manuellement en cas de panne électrique ou de défaillance du fil à mémoire de forme 50.

Le deuxième élément de verrouillage 30 exerce un effort sur la première zone de coopération 20a du premier élément de verrouillage situé à une première distance d₁ de l'axe de rotation de verrou 22 perpendiculairement à la première zone de coopération 20a et l'élément intermédiaire 40 s'y oppose, lorsqu'il est en position de retenue, en exerçant sur la deuxième zone de coopération 20b du premier élément de verrouillage 20 un effort située à une deuxième distance d₂ de l'axe de rotation de verrou 22. La deuxième distance d₂ est environ trois fois supérieure à la première distance d₁. Le rapport d₂/d₁ constitue un bras de levier, de sorte que l'effort de l'élément intermédiaire 40 sur la deuxième zone de coopération 20b pour s'opposer à l'ouverture de la trappe 6 est inférieure à l'effort exercé par la tige 32 sur la première zone de coopération 20a.

Dans le mode de réalisation illustré, le fil à mémoire de forme 50 est souple. On définit par fil souple un fil se déformant sous son propre poids.

Le fil à mémoire de forme 50 s'étend entre une première extrémité 50a et une deuxième extrémité 50b. Il présente une première longueur L₁ entre la première extrémité 50a et la deuxième extrémité 50b lorsqu'il n'est pas activé et une deuxième longueur L₂ entre la première extrémité 50a et la deuxième extrémité 50b lorsqu'il est activé. Dans le premier mode de réalisation illustré, la deuxième longueur L₂ est plus courte que la première longueur L₁.

Le fil à mémoire de forme 50 est activé en chauffant le fil à mémoire de forme 50, de préférence à une température d'environ 120 degrés Celsius. Lorsqu'il est activé, le fil à mémoire de forme 50 tend à changer de forme en exerçant un effort de traction. Dans le mode de réalisation illustré, le fil à mémoire de forme 50 constitue une résistance électrique, de sorte que le fil à mémoire de forme 50 est alimenté électriquement pour le faire chauffer. En variante, l'élément à mémoire de forme pourrait être chauffé par une résistance électrique distincte de l'élément à mémoire de forme.

Le fil à mémoire de forme 50 présente en outre une portion intermédiaire 50c coopérant avec l'élément intermédiaire 40 pour le déplacer de la position de retenue vers la position de libération. Dans le mode de réalisation illustré, l'élément intermédiaire 40 vient au contact d'un pion 48 rigidement fixé à l'élément intermédiaire 40. L'axe de rotation intermédiaire 42 est disposé entre le pion 48 et l'élément de butée 46. La distance entre l'axe de rotation 42 et l'élément de butée 46 est plus grande que la distance entre l'axe de rotation 42 et le pion 48, sensiblement deux fois plus grande dans le mode de réalisation illustré.

Dans le premier mode de réalisation illustré, le fil à mémoire de forme 50 présente plus précisément une première portion rectiligne 52 s'étendant entre la première extrémité 50a et la portion intermédiaire 50c, et une deuxième portion rectiligne 54 s'étendant entre la portion intermédiaire 50c et la deuxième extrémité 50b. La portion intermédiaire 50c est recourbée autour du pion 48. La deuxième portion rectiligne 50b forme un angle α par rapport à la première portion intermédiaire 50a. La force F s'appliquant au pion 48 est alors égale à deux fois la force de traction s'exerçant dans le fil à mémoire de forme 50 multiplié par le cosinus de la moitié de l'angle α (cosinus de α/2). L'amplitude de déplacement du pion 48 est égale à la différence entre la première longueur L₁ et la deuxième longueur L₂ divisée par deux et multipliée par le cosinus de la moitié de l'angle α (cosinus de α/2). Ainsi, il est possible à encombrement constant d'ajuster l'amplitude de déplacement du pion 48 et la force F s'appliquant au pion 48 lorsque le fil à mémoire de forme est activé. L'angle α est de préférence proche de 20 degrés.

Lorsque le fil à mémoire de forme 50 est activé, le fil à mémoire de forme 50 déplace l'élément intermédiaire 40 de la position de retenue à la position de libération à l'encontre de la sollicitation du ressort de rappel 44. Un dispositif de détection (non représenté) est de préférence prévu pour détecter la présence de l'élément intermédiaire 40 dans la position de libération, ce dispositif de détection pouvant notamment comprendre un aimant placé sur l'élément intermédiaire 40 et un capteur à effet hall porté par le boitier 12.

Lorsque l'élément intermédiaire 40 se déplace de la position de retenue vers la position de libération, le ressort de rappel 44 se rapproche de l'axe de rotation intermédiaire 42, de sorte que le ressort de rappel 40 exerce sur le fil à mémoire de forme 50 par l'intermédiaire du pion 48 un effort F₁ lorsque l'élément intermédiaire est dans la position de retenue et un effort F₂ s'opposant à la force F appliquée par le fil à mémoire de forme 50 lorsque l'élément intermédiaire 40 est dans la position déverrouillée, l'effort F₂ étant inférieur à l'effort F₁. Ainsi, l'effort F₁ permet à la fois de maintenir l'élément intermédiaire 40 en position de retenue et de solliciter le fil à mémoire de forme 50 pour qu'il reprenne sa longueur L₁ lorsque le fil à mémoire de forme 50 n'est plus activé, tandis que l'effort F₂, inférieur, ne s'oppose que faiblement à la force F appliquée par le fil à mémoire de forme lorsqu'il est activé.

Du fait que l'élément intermédiaire 40 vient en butée, via la surface de butée 45 contre la surface d'arrêt 13, dans la position de retenue, la longueur L₁ est précisément définie, ainsi que l'effort F₁. Ainsi, la déformation du fil à mémoire de forme est contrôlée, évitant une déformation excessive risquant de l'endommager, et le déplacement de l'élément intermédiaire 40 de la position de retenue à la position de libération est bien maitrisé, notamment les fluctuations du temps nécessaire à ce déplacement sont réduites.

Par conséquent, lorsque la trappe 6 est en position fermée, le premier élément de verrouillage 20 est en position verrouillée et l'élément intermédiaire 40 est en position de retenue tel qu'illustré à la figure 2, et lorsque le fil à mémoire de forme 50 est alors activé :
- le fil à mémoire de forme 50 se contracte, exerçant l'effort F sur l'élément intermédiaire 40, supérieur à l'effort du ressort de rappel 44, de sorte que l'élément intermédiaire 44 tourne autour de l'axe de rotation intermédiaire 42, tel qu'illustré par la flèche 49 à la figure 3, l'élément intermédiaire 40 passe alors dans la position de libération,
- le fil à mémoire de forme 50 est de préférence désactivé (l'alimentation électrique est interrompue) pour minimiser l'énergie électrique, lorsque l'arrivée de l'élément intermédiaire 40 dans la position de libération est détectée,
- la deuxième zone de coopération 20b du premier élément de verrouillage 20 n'étant alors plus retenue par l'élément de butée 46 de l'élément intermédiaire 40, le premier élément de verrouillage 20 tourne autour de l'axe de rotation de verrou 22, tel qu'illustré par la flèche 29 à la figure 3, le premier élément de verrouillage 20 passe alors dans la position déverrouillée,
- le deuxième élément de verrouillage 30 n'étant alors plus retenu par le premier élément de verrouillage 20, la trappe 6 tourne autour de l'axe d'articulation 5, tel qu'illustré par la flèche 9 à la figure 4, la trappe 6 passe alors dans la position ouverte.

Ainsi, le dispositif de verrouillage 10 comprend en quelque sorte un système à armement dans lequel le premier élément de verrouillage 10 constitue la détente et l'élément intermédiaire 40 constitue la gâchette.

La puissance dissipée pendant l'activation du fil à mémoire de forme 50 est de préférence inférieure à 10W, en particulier inférieure à 5W. La durée pendant laquelle le fil à mémoire de forme 50 est activée est de préférence inférieure à 1 seconde, en particulier inférieur à 3 dixièmes de secondes.

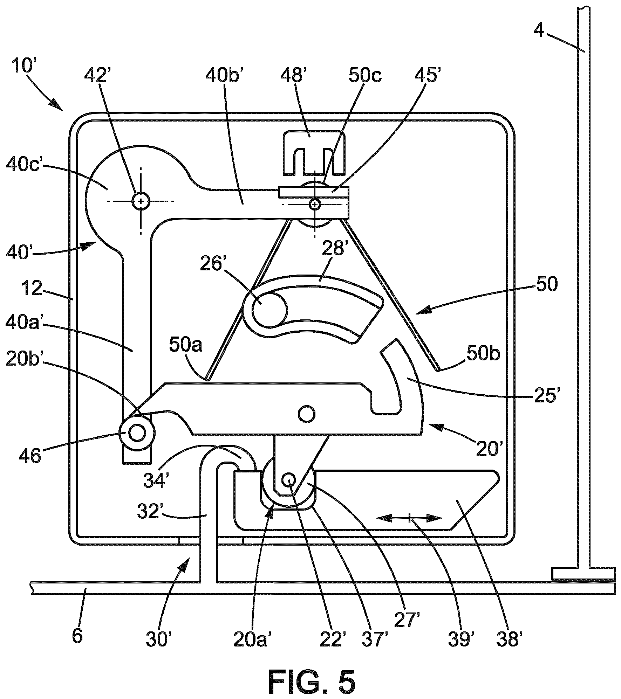

Le deuxième mode de réalisation, illustré à la figure 5, se distingue essentiellement du premier mode de réalisation selon quatre aspects indépendants relatifs à une variante de dispositif de verrouillage 10'.

Selon un premier aspect, le premier élément de verrouillage 20' est monté pivotant sur le boitier 12 autour de l'axe de rotation de verrou 22' et comprend un rouleau 27' formant la première zone de coopération 20a'. Le dispositif de verrouillage 10' comprend en outre un adaptateur 38' monté coulissant sur le boitier 12, tel qu'illustré par la flèche double 39'. L'adaptateur 38' présente une gorge 37' recevant le rouleau 27'. Le deuxième élément de verrouillage 30' comprend à une extrémité une tige 32' fixée à la trappe 6 et à une extrémité opposée une tête 34' en forme de crochet adaptée pour coopérer avec l'adaptateur 38'. Lorsque le premier élément de verrouillage 20' est dans la position verrouillée, le premier élément de verrouillage 20' agit sur l'adaptateur 20' via le rouleau 27' et la gorge 37' pour l'amener dans une position dans laquelle il bloque le déplacement du deuxième élément de verrouillage 30' et empêche ainsi le déplacement de la trappe 6 de la position fermée vers la position ouverte.

Selon un deuxième aspect, le ressort d'armement 24 est remplacé par un aimant 26', permanent, et un guide magnétique 28'. Le guide magnétique 28' permet de canaliser le flux magnétique de l'aimant 26' et permet à l'aimant 26' de solliciter le premier élément de verrouillage 20' vers la position déverrouillée sur l'ensemble du déplacement du premier élément de verrouillage 20' entre la position verrouillée et la position déverrouillée. En outre, le premier élément de verrouillage 20' comprend au moins une partie 25' en matériau magnétique ou magnétisable adaptée pour coopérer avec l'aimant 26' et le guide magnétique 28', afin de solliciter le déplacement du premier élément de verrouillage de la position verrouillée vers la position déverrouillée.

Selon un troisième aspect, le ressort de rappel 44 est remplacé par un aimant 48', permanent et fixé au boitier 12 et un élément magnétique ou magnétisable 45' fixé ou intégré à l'élément intermédiaire 40'. L'aimant permanent 48' et l'élément magnétique ou magnétisable 45' sollicitent le fil à mémoire de forme 50 pour qu'il s'étende après avoir été activé.

Selon un quatrième aspect, l'élément intermédiaire 40' présente un premier bras 40a' sensiblement rectiligne s'étendant à partir de l'axe de rotation intermédiaire 42' et un deuxième bras 40b' s'étendant perpendiculairement au premier bras 40a' à partir de l'axe de rotation intermédiaire 42', de sorte que l'élément intermédiaire 40' présente sensiblement une forme de L. L'élément intermédiaire 40' présente une partie massive 40c' à proximité du premier bras 40a' et du deuxième bras 40b', afin que le centre d'inertie de l'élément intermédiaire 40' se situe au niveau de l'axe de rotation intermédiaire 42'. L'élément de butée 46 est porté par le premier bras 40a' et l'élément magnétique ou magnétisable 45' est porté par le deuxième bras 40b'.

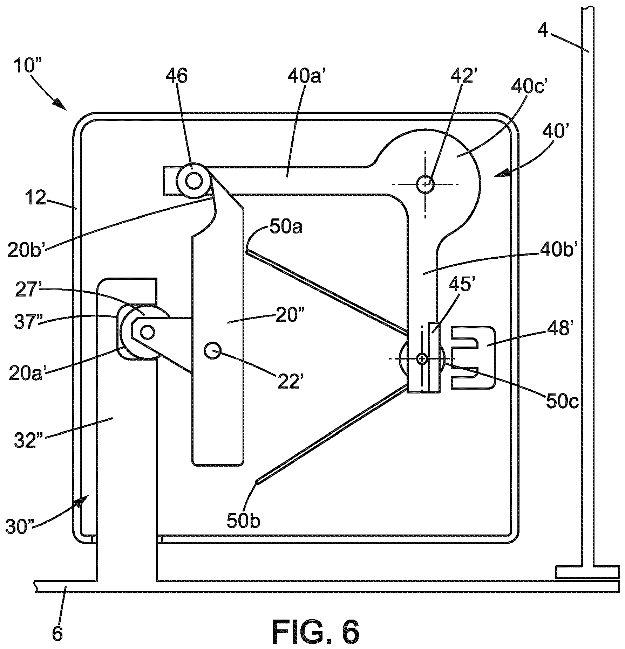

Le troisième mode de réalisation, illustré à la figure 6, se distingue essentiellement du deuxième mode de réalisation par une autre variante de dispositif de verrouillage 10", et en particulier en ce que le premier élément de verrouillage 20" coopère directement avec le deuxième élément de verrouillage 30" et le premier élément de verrouillage 20" est sollicité vers la position déverrouillée uniquement par le deuxième élément de verrouillage 30", via la pesanteur s'exerçant sur la trappe 6 et optionnellement un ressort sollicitant la trappe 6 vers la position ouverte. Plus précisément, le deuxième élément de verrouillage 30" comprend toujours à une extrémité une tige 32" fixée à la trappe 6, mais à une extrémité opposée le deuxième élément de verrouillage 30" intègre une gorge 37" coopérant avec le rouleau 27' du premier élément de verrouillage 20". En outre, le dispositif de verrouillage 10" est dépourvu de l'aimant 26' et du guide magnétique 28' sollicitant le premier élément de verrouillage vers la position déverrouillée.

Bien entendu l'invention n'est nullement limitée au(x) mode(s) de réalisation décrit(s) à titre illustratif, non limitatif. Ainsi, la longueur de l'élément à mémoire de forme pourrait augmenter lorsque l'élément à mémoire de forme est activé.

Par ailleurs, même si cela n'est pas préféré, l'élément à mémoire de forme pourrait être rigide, notamment une tige, au lieu d'un fil souple comme dans les modes de réalisations illustrés.

## Revendications

1. Dispositif de verrouillage (10) comprenant :
- un support (12),
- un premier élément de verrouillage (20, 20', 20") et un deuxième élément de verrouillage (30, 30', 30"), le premier élément de verrouillage (20, 20', 20") étant monté mobile sur le support (12) entre une position verrouillée et une position déverrouillée, dans la position verrouillée le premier élément de verrouillage (20, 20', 20") coopère avec le deuxième élément de verrouillage (30),
- un élément à mémoire de forme (50) présentant une première longueur (L₁) lorsqu'il n'est pas activé et une deuxième longueur (L₂) lorsqu'il est activé,
- un élément intermédiaire (40, 40') mobile entre une position de retenue et une position de libération, dans la position de retenue l'élément intermédiaire (40) retient le premier élément de verrouillage (20, 20', 20") dans la position verrouillée et dans la position de libération l'élément intermédiaire (40, 40') autorise le déplacement du premier élément de verrouillage (20, 20', 20") vers la position déverrouillée, l'élément à mémoire de forme (50) est relié à l'élément intermédiaire (40) pour déplacer l'élément intermédiaire (40, 40') vers la position de libération lorsque l'élément à mémoire de forme (50) est activé, et
- un dispositif de rappel (44) exerçant un premier effort de rappel (F₁) sur l'élément à mémoire de forme (50) lorsque l'élément à mémoire de forme (50) présente la première longueur (L₁) et un deuxième effort (F₂) sur l'élément à mémoire de forme (50) lorsque l'élément à mémoire de forme (50) présente la deuxième longueur (L₂),
**caractérisé en ce que** le premier effort de rappel (F₁) est supérieur au deuxième effort (F₂) de rappel.

2. Dispositif de verrouillage selon la revendication 1 dans lequel le premier élément de verrouillage (20, 20', 20") est sollicité vers la position déverrouillée.

3. Dispositif de verrouillage selon la revendication précédente comprenant un élément élastique (24) d'armement sollicitant le premier élément de verrouillage (20) vers la position déverrouillée.

4. Dispositif de verrouillage selon la revendication 2 comprenant en outre un aimant (26) sollicitant magnétiquement le premier élément de verrouillage (20') vers la position déverrouillée.

5. Dispositif de verrouillage selon l'une quelconque des revendications précédentes dans lequel l'élément à mémoire de forme est un fil à mémoire de forme (50).

6. Dispositif de verrouillage selon la revendication précédente dans lequel le fil à mémoire de forme (50) a un diamètre inférieur à 0,5 millimètre.

7. Dispositif de verrouillage selon l'une quelconque des revendications 5 et 6, dans lequel :
- le fil à mémoire de forme (50) présente une première extrémité (50a), une deuxième extrémité (50b) et une portion intermédiaire (50c), le fil à mémoire de forme agit sur l'élément intermédiaire (40, 40') par l'intermédiaire de la portion intermédiaire (50c),
- le fil à mémoire de forme présente une première portion rectiligne (52) entre la première extrémité (50a) et la portion intermédiaire (50c),
- le fil à mémoire de forme présente une deuxième portion rectiligne (54) entre la deuxième extrémité (50b) et la portion intermédiaire (50c), et
- la première portion rectiligne (52) forme un angle (α) par rapport à la deuxième portion rectiligne (54) compris entre 5 degrés et 90 degrés, de préférence compris entre 10 degrés et 45 degrés.

8. Dispositif de verrouillage selon l'une quelconque des revendications précédentes dans lequel le dispositif de rappel (44) sollicite l'élément intermédiaire (40, 40') vers la position de retenue.

9. Dispositif de verrouillage selon la revendication précédente dans lequel l'élément intermédiaire (40, 40') vient en butée contre le support (12) dans la position de retenue.

10. Dispositif de verrouillage selon l'une quelconque des revendications précédentes dans lequel l'élément intermédiaire (40, 40') est monté rotatif autour d'un axe de rotation intermédiaire (42) entre la position de retenue et la position de libération sur le support (12).

11. Dispositif de verrouillage selon la revendication précédente dans lequel l'axe de rotation intermédiaire (42, 42') est fixe par rapport au support (12) et l'élément intermédiaire (40, 40') présente un centre d'inertie situé à proximité immédiate de l'axe de rotation intermédiaire (42, 42').

12. Dispositif de verrouillage selon l'une quelconque des revendications précédentes dans lequel le premier élément de verrouillage (20, 20', 20") est monté rotatif autour d'un axe de rotation de verrou (22, 22') entre la position verrouillée et la position déverrouillée sur le support (12).

13. Dispositif de verrouillage selon la revendication précédente dans lequel l'axe de rotation de verrou (22) est fixe par rapport au support (12) et le premier élément de verrouillage (20, 20', 20") présente un centre d'inertie situé à proximité immédiate de l'axe de rotation de verrou (22, 22').

14. Dispositif de verrouillage selon l'une quelconque des revendications 10 à 13 dans lequel le premier élément de verrouillage (20) forme un crochet.

15. Dispositif de verrouillage selon l'une quelconque des revendications précédentes comprenant en outre un galet pivotant (46), l'élément intermédiaire (40, 40') retenant le premier élément de verrouillage (20, 20', 20") dans la position verrouillée par l'intermédiaire du galet pivotant (46).

16. Dispositif de rangement (1) de masque respiratoire destiné à la fourniture d'oxygène dans un aéronef (90) comprenant un dispositif de verrouillage (10) selon l'une quelconque des revendications précédentes et :
- un réceptacle (2) comportant un logement (4) et une trappe (6), la trappe (6) étant mobile par rapport au logement (4) entre une position fermée et une position ouverte,
- l'un parmi le support (12) et le deuxième élément de verrouillage (30) est porté par le logement (4) et l'autre est porté par la trappe (6), et
- au moins un masque respiratoire (8) disposé dans le réceptacle (2) lorsque la trappe (6) est en position fermée.

17. Dispositif de rangement (1) selon la revendication précédente dans lequel le déplacement de la trappe (6) par rapport au logement (4) de la position fermée vers la position ouverte entraine le déplacement du premier élément de verrouillage (20, 20', 20") vers la position déverrouillée.

18. Système d'alimentation en oxygène d'aéronef comprenant un dispositif de rangement selon l'une quelconque des revendications 16 et 17, et une source d'oxygène (60) reliée au masque respiratoire (8).

## Patentansprüche

1. Verriegelungsvorrichtung (10) umfassend:
- einen Träger (12),
- ein erstes Verriegelungselement (20, 20', 20") und ein zweites Verriegelungselement (30, 30', 30"), wobei das erste Verriegelungselement (20, 20', 20") an dem Träger (12) zwischen einer verriegelten Position und einer entriegelten Position beweglich angebracht ist, wobei das erste Verriegelungselement (20, 20', 20") in der verriegelten Position mit dem zweiten Verriegelungselement (30) zusammenwirkt,
- ein Formgedächtniselement (50), das eine erste Länge (L₁) aufweist, wenn es nicht aktiviert ist, und eine zweite Länge (L₂) aufweist, wenn es aktiviert ist,
- ein Zwischenelement (40, 40'), das zwischen einer Halteposition und einer Freigabeposition beweglich ist, wobei das Zwischenelement (40) in der Halteposition das erste Verriegelungselement (20, 20', 20") in der verriegelten Position zurückhält, und das Zwischenelement (40, 40') in der Freigabeposition die Bewegung des ersten Verriegelungselements (20, 20', 20") zur entriegelten Position hin ermöglicht, wobei das Formgedächtniselement (50) mit dem Zwischenelement (40) verbunden ist, um das Zwischenelement (40, 40') zur Freigabeposition zu bewegen, wenn das Formgedächtniselement (50) aktiviert ist, und
- eine Rückstellvorrichtung (44), die eine erste Rückstellkraft (F₁) auf das Formgedächtniselement (50) ausübt, wenn das Formgedächtniselement (50) die erste Länge (L₁) aufweist, und eine zweite Kraft (F₂) auf das Formgedächtniselement (50) ausübt, wenn das Formgedächtniselement (50) die zweite Länge (L₂) aufweist,
**dadurch gekennzeichnet, dass** die erste Rückstellkraft (F₁) größer ist als die zweite Rückstellkraft (F₂).

2. Verriegelungsvorrichtung nach Anspruch 1, wobei das erste Verriegelungselement (20, 20', 20") zur entriegelten Position hin vorgespannt ist.

3. Verriegelungsvorrichtung gemäß dem vorhergehenden Anspruch, umfassend ein elastisches Bewaffnungselement (24), welches das erste Verriegelungselement (20) zur entriegelten Position hin vorspannt.

4. Verriegelungsvorrichtung nach Anspruch 2, ferner umfassend einen Magneten (26), der das erste Verriegelungselement (20') magnetisch zur entriegelten Position hin vorspannt.

5. Verriegelungsvorrichtung nach einem der vorhergehenden Ansprüche, wobei das Formgedächtniselement ein Formgedächtnisdraht (50) ist.

6. Verriegelungsvorrichtung nach dem vorhergehenden Anspruch, wobei der Formgedächtnisdraht (50) einen Durchmesser von weniger als 0,5 Millimeter hat.

7. Verriegelungsvorrichtung nach einem der Ansprüche 5 und 6, wobei:
- der Formgedächtnisdraht (50) ein erstes Ende (50a), ein zweites Ende (50b) und einen Zwischenabschnitt (50c) aufweist, wobei der Formgedächtnisdraht auf das Zwischenelement (40, 40') über den Zwischenabschnitt (50c) einwirkt,
- der Formgedächtnisdraht einen ersten geradlinigen Abschnitt (52) zwischen dem ersten Ende (50a) und dem Zwischenabschnitt (50c) aufweist,
- der Formgedächtnisdraht einen zweiten geradlinigen Abschnitt (54) zwischen dem zweiten Ende (50b) und dem Zwischenabschnitt (50c) aufweist, und
- der erste geradlinige Abschnitt (52) mit dem zweiten geradlinigen Abschnitt (54) einen Winkel (α) von 5 Grad oder mehr, jedoch nicht mehr als 90 Grad bildet, vorzugsweise von 10 Grad oder mehr, jedoch nicht mehr als 45 Grad.

8. Verriegelungsvorrichtung nach einem der vorhergehenden Ansprüche, wobei:
- die Rückstellvorrichtung (44) das Zwischenelement (40, 40') zur Halteposition hin vorspannt.

9. Verriegelungsvorrichtung nach dem vorhergehenden Anspruch, wobei das Zwischenelement (40, 40') in der Halteposition zur Anlage an den Träger (12) kommt.

10. Verriegelungsvorrichtung nach einem der vorhergehenden Ansprüche, wobei das Zwischenelement (40, 40') um eine Zwischendrehachse (42) zwischen der Halteposition und der Freigabeposition drehbar an dem Träger (12) montiert ist.

11. Verriegelungsvorrichtung nach dem vorhergehenden Anspruch, wobei die Zwischendrehachse (42, 42') relativ zum Träger (12) fixiert ist, und das Zwischenelement (40, 40') einen Schwerpunkt aufweist, der sich in unmittelbarer Nähe der Zwischendrehachse (42, 42') befindet.

12. Verriegelungsvorrichtung nach einem der vorhergehenden Ansprüche, wobei das erste Verriegelungselement (20, 20', 20") um eine Riegeldrehachse (22, 22') zwischen der verriegelten Position und der entriegelten Position drehbar an dem Träger (12) montiert ist.

13. Verriegelungsvorrichtung nach dem vorhergehenden Anspruch, wobei die Riegeldrehachse (22) in Bezug auf den Träger (12) fixiert ist, und das erste Verriegelungselement (20, 20', 20") einen Schwerpunkt aufweist, der sich in unmittelbarer Nähe der Riegeldrehachse (22, 22') befindet.

14. Verriegelungsvorrichtung nach einem der Ansprüche 10 bis 13, wobei das erste Verriegelungselement (20) einen Haken bildet.

15. Verriegelungsvorrichtung nach einem der vorhergehenden Ansprüche, ferner umfassend eine Schwenkrolle (46), wobei das Zwischenelement (40, 40') das erste Verriegelungselement (20, 20', 20") in der verriegelten Position mittels der Schwenkrolle (46) zurückhält.

16. Aufbewahrungsvorrichtung (1) für eine Atemmaske, die zum Zuführen von Sauerstoff in einem Flugzeug (90) bestimmt ist, umfassend eine Verriegelungsvorrichtung (10) gemäß einem der vorhergehenden Ansprüche und:
- eine Aufnahme (2), die ein Gehäuse (4) und eine Klappe (6) umfasst, wobei die Klappe (6) relativ zu dem Gehäuse (4) zwischen einer geschlossenen Position und einer offenen Position beweglich ist;
- wobei ein Element von dem Träger (12) und dem zweiten Verriegelungselement (30) vom Gehäuse (4) getragen wird, und das andere von der Klappe (6) getragen wird, und
- wobei mindestens eine Atemmaske (8) in der Aufnahme (2) angeordnet ist, wenn sich die Klappe (6) in der geschlossenen Position befindet.

17. Aufbewahrungsvorrichtung (1) nach dem vorhergehenden Anspruch, wobei die Bewegung der Klappe (6) relativ zum Gehäuse (4) von der geschlossenen Position zur offenen Position die Bewegung des ersten Verriegelungselements (20, 20', 20") zur entriegelten Position bewirkt.

18. Sauerstoffversorgungssystem für ein Flugzeug, umfassend eine Aufbewahrungsvorrichtung nach einem der Ansprüche 16 und 17 und eine Sauerstoffquelle (60), die mit der Atemmaske (8) verbunden ist.

## Claims

1. Locking device (10) comprising:
- a support (12),
- a first locking member (20, 20', 20") and a second locking member (30, 30', 30"), the first locking member (20, 20', 20") being mounted on the support (12) so as to move between a locked position and an unlocked position, the first locking member (20, 20', 20") engaging with the second locking member (30) when in the locked position,
- a shape-memory member (50) having a first length (L₁) when not activated and a second length (L₂) when activated,
- an intermediate member (40, 40') movable between a retaining position and a release position, the intermediate member (40) in the retaining position retaining the first locking member (20, 20', 20") in the locked position and the intermediate member (40, 40') in the release position allowing the first locking member (20, 20', 20") to move to the unlocked position, the shape-memory member (50) is connected to the intermediate member (40) so as to move the intermediate member (40, 40') to the release position when the shape-memory member (50) is activated, and
- a return device (44) exerting a first return force (F₁) on the shape-memory member (50) when the shape-memory member (50) has the first length (L₁) and a second force (F₂) on the shape-memory member (50) when the shape-memory member (50) has the second length (L₂),
**characterized in that** the first return force (F₁) is greater than the second return force (F₂).

2. Locking device according to claim 1, wherein the first locking member (20, 20', 20") is biased towards the unlocked position.

3. Locking device according to the preceding claim, comprising an elastic arming member (24) biasing the first locking member (20) towards the unlocked position.

4. Locking device according to claim 2, further comprising a magnet (26) magnetically biasing the first locking member (20') towards the unlocked position.

5. Locking device according to any one of the preceding claims, wherein the shape-memory member is a shape-memory wire (50).

6. Locking device according to the preceding claim, wherein the diameter of the shape-memory wire (50) is less than 0.5 millimeters.

7. Locking device according to any one of claims 5 and 6, wherein:
- the shape-memory wire (50) has a first end (50a), a second end (50b), and an intermediate portion (50c), the shape-memory wire acting on the intermediate member (40, 40') via the intermediate portion (50c),
- the shape-memory wire has a first straight portion (52) between the first end (50a) and the intermediate portion (50c),
- the shape-memory wire has a second straight portion (54) between the second end (50b) and the intermediate portion (50c), and
- the first straight portion (52) forms an angle (α) with the second straight portion (54) comprised between 5 degrees and 90 degrees, preferably between 10 degrees and 45 degrees.

8. Locking device according to any one of the preceding claims, wherein the return device (44) biases the intermediate member (40, 40') towards the retaining position.

9. Locking device according to the preceding claim, wherein the intermediate member (40, 40') abuts against the support (12) when in the retaining position.

10. Locking device according to any one of the preceding claims, wherein the intermediate member (40, 40') is mounted so as to rotate about an intermediate axis of rotation (42) between the retaining position and the release position on the support (12).

11. Locking device according to the preceding claim, wherein the intermediate axis of rotation (42, 42') is fixed relative to the support (12) and the intermediate member (40, 40') has a center of inertia located in the immediate vicinity of the intermediate axis of rotation (42, 42').

12. Locking device according to any one of the preceding claims, wherein the first locking member (20, 20', 20") is mounted so as to rotate about a lock rotation axis (22, 22') between the locked position and the unlocked position on the support (12).

13. Locking device according to the preceding claim, wherein the lock rotation axis (22) is fixed relative to the support (12) and the first locking member (20, 20', 20") has a center of inertia located in the immediate vicinity of the lock rotation axis (22, 22').

14. Locking device according to any one of claims 10 to 13, wherein the first locking member (20) forms a hook.

15. Locking device according to any one of the preceding claims, further comprising a pivoting roller (46), the intermediate member (40, 40') retaining the first locking member (20) in the locked position through the pivoting roller (46).

16. Storage device (1) for a breathing mask intended for supplying oxygen in an aircraft (90), the storage device comprising a locking device (10) according to any one of the preceding claims and:
- a receptacle (2) comprising a housing (4) and a door (6), the door (6) being movable relative to the housing (4) between a closed position and an open position,
- one among the support (12) and the second locking member (30) is carried by the housing (4) and the other is carried by the door (6), and
- at least one breathing mask (8) arranged within the receptacle (2) when the door (6) is in the closed position.

17. Storage device (1) according to the preceding claim, wherein the movement of the door (6) relative to the housing (4) from the closed position to the open position causes the movement of the first locking member (20, 20', 20") to the unlocked position.

18. Aircraft oxygen supply system comprising a storage device according to any one of claims 16 and 17 and an oxygen source (60) connected to the breathing mask (8).
